# FASCICULE DE BREVET EUROPEEN

(11) **EP 2 296 956 B1**
(45) Date de publication et mention de la délivrance du brevet: **26.10.2016**
(21) Numéro de dépôt: 09757701.9
(22) Date de dépôt: 04.06.2009
(51) Int. Cl.: B62D 1/184, B62D 1/19

(54) **COLONNE DE DIRECTION RÉGLABLE AMÉLIORÉE POUR VÉHICULES AUTOMOBILES**
VERBESSERTE EINSTELLBARE LENKSÄULE FÜR KRAFTFAHRZEUGE
IMPROVED ADJUSTABLE STEERING COLUMN FOR MOTOR VEHICLES

(30) Priorité: 04.06.2008 FR 0853693
(43) Date de publication de la demande: 23.03.2011
(73) Titulaire: Robert Bosch Automotive Steering Vendôme, 41100 Vendome (FR)
(72) Inventeur: MONTEIL, Pascal, F-41800 Saint Rimay (FR); GENET, Nicolas, F-41100 Vendome (FR); ORIAC, Antoine, F-41100 Vendome (FR)
(74) Mandataire: Novagraaf Technologies
(86) Numéro de dépôt international: PCT/FR2009/000656
(87) Numéro de publication internationale: WO 2009/147325

(56) Documents cités:
- EP-A- 0 641 705
- EP-A2- 1 621 443
- WO-A1-2009/121386
- WO-A1-2010/094050
- WO-A2-2010/009486
- FR-A- 2 881 707

## Description

L'invention concerne une colonne de direction réglable pour véhicules automobiles.

L'invention concerne plus particulièrement une colonne de direction réglable en profondeur (réglage axial) ou bien réglable en profondeur et en hauteur (réglage axial et radial), la colonne de direction comprenant un tube-corps monté coulissant dans un ensemble support, des moyens de réglage de la position du tube-corps dans l'ensemble support et de blocage dans la position souhaitée, ainsi qu'un dispositif permettant de dissiper, ou d'absorber, l'énergie générée lors d'une collision frontale du véhicule avec un obstacle, suite à l'impact du conducteur sur la colonne de direction.

La mise en oeuvre de dispositifs d'absorption d'énergie sur des colonnes de direction est connue en soi. A titre d'exemple, citons la demande de brevet GB 2 281 539. Le dispositif décrit dans ce document présente cependant l'inconvénient d'imposer l'utilisation d'éléments structurellement distincts pour obtenir un dispositif remplissant à la fois la fonction d'absorption d'énergie et la fonction de retenue axiale.

Afin de tenter de palier cet inconvénient, il a été proposé dans la demande internationale WO96/04162 de combiner les moyens de réglage de la position de la colonne de direction avec le mécanisme d'absorption d'énergie. Il a ainsi été proposé un dispositif permettant de régler axialement la colonne de direction et conjointement de dissiper l'énergie générée par l'impact du conducteur sur la colonne de direction.

Pour ce faire, la colonne de direction comprend un tube-corps monté coulissant dans un élément support fixe, le tube-corps portant des premiers moyens de blocage aux fins d'un engagement libérable avec des seconds moyens de blocage. La colonne de direction comprend en outre une came destinée à amener les premier et seconds moyens de blocage à s'engager et ainsi bloquer le tube-corps par rapport à l'élément support. Les deuxièmes moyens de blocage sont reliés à un dispositif d'absorption d'énergie comportant une bande allongée disposée autour d'un arbre solidaire de l'élément support fixe autour duquel la bande allongée peut être tirée. L'agencement est tel que, en utilisation normale, le tube-corps peut être ajusté par coulissement dans l'élément support puis bloqué dans la position souhaitée par lesdits premiers et seconds moyens de blocage. Lorsque le véhicule subit un impact frontal, l'énergie appliquée sur la colonne de direction entraîne le tube-corps dans l'élément support (rétractation du tube-corps), amenant les premiers et seconds moyens de blocage, bloqués l'un à l'autre, à tirer l'élément allongé autour de l'arbre de manière à absorber l'énergie.

La colonne de direction de WO96/04162 et le dispositif d'absorption et de réglage associé présentent cependant plusieurs inconvénients.

Un inconvénient majeur reste le nombre de pièces nécessaires à la mise en oeuvre du dispositif cumulant les fonctions de réglage de la colonne de direction et de dissipation d'énergie, et plus particulièrement nécessaire pour le maintien des moyens de blocage bloqués l'un à l'autre, selon que l'on se place en situation de blocage sans collision ou en situation de blocage avec collision. En effet, dans la situation de blocage sans que n'intervienne une collision, il est fait appel à un élément formant ressort et à une came, cette dernière agissant sur l'élément formant ressort pour maintenir en prise les deuxièmes moyens de blocage sur les premiers moyens de blocage. En revanche, lorsqu'une collision intervient, du fait de la rétraction du tube-corps dans l'élément de support, l'élément formant ressort n'est plus en contact avec la came. Le maintien en prise des premiers et deuxièmes moyens de blocage est alors effectué par des moyens complémentaires agissant sur l'élément formant ressort. Les moyens complémentaires consistent en une plateforme ménagée à l'intérieur de l'élément de support.

Par ailleurs, l'agencement des différents moyens requiert un positionnement précis ainsi qu'un dimensionnement adapté de l'élément formant ressort afin d'éviter d'éventuels frottements entre l'élément formant ressort et la plateforme. De tels frottements entraveraient en effet la mise en oeuvre du mécanisme d'absorption d'énergie.

De même, le dispositif de WO96/04162 est tel que les premiers et deuxièmes moyens de blocage, l'élément formant ressort et la came imposent des emplacements bien spécifiques pour permettre la mise en oeuvre des moyens de blocage et le mécanisme d'absorption d'énergie.

Enfin, du fait que l'arbre autour duquel la bande allongée formant le dispositif d'absorption d'énergie peut être tirée est solidaire de l'élément support et que les moyens de blocage sont portés par le tube-corps au cours de la rétractation du tube-corps, l'absorption d'énergie n'est pas toujours assurée au début de la rétraction du tube-corps. Celle-ci dépend en effet de la position du tube-corps dans l'ensemble support lors de l'impact et du positionnement d'origine des pièces les unes par rapport aux autres.

Il est connu également de la demande de brevet français FR 2 881 707 un dispositif d'absorption instantanée d'énergie destiné à équiper une colonne de direction, le dispositif comprenant un élément intermédiaire fixe relié à l'ensemble support de la colonne, un élément intermédiaire mobile relié au tube-corps de la colonne et au moins un élément d'absorption d'énergie reliant l'élément fixe à l'élément mobile. Plus particulièrement l'élément d'absorption d'énergie est amarré à un axe d'accrochage ménagé sur l'élément intermédiaire mobile d'une part et à un axe de tenue ménagé sur l'élément intermédiaire fixe d'autre part. L'élément intermédiaire fixe est fixé sur l'ensemble support par le biais d'un mécanisme à rochet.

Du fait du nombre de pièces nécessaires pour le montage de l'élément permettant l'absorption d'énergie entre l'ensemble-support et le tube corps de la colonne de direction, l'assemblage du dispositif d'absorption précédemment décrit à une colonne de direction s'avère peu aisé. Il requiert en particulier des fixations distinctes pour chacun des éléments formant le dispositif d'absorption d'énergie.

L'invention vise à remédier aux problèmes de l'art antérieur précédemment mentionnés en proposant une colonne de direction réglable au moins axialement et apte à absorber l'énergie générée sur toute la course de rétractation du tube-corps, et dont le nombre de pièces est réduit.

A cet effet, et selon un premier aspect, l'invention propose une colonne de direction réglable pour véhicule automobile comprenant un ensemble support destiné à être fixé sur un châssis de véhicule, un tube-corps, d'axe longitudinal AA, monté coulissant dans l'ensemble support, des moyens d'ajustement et de blocage aptes à passer d'un état d'ajustement de la position du tube-corps dans l'ensemble support à un état de blocage du tube-corps dans une position ajustée souhaitée dans l'ensemble support, un élément plastiquement déformable d'absorption d'énergie coopérant avec un organe de déformation solidaire du tube-corps pour se déformer plastiquement lors d'une rétraction du tube-corps dans l'ensemble support suite à un impact transmis au tube-corps lorsque les moyens d'ajustement et de blocage sont en état de blocage, ainsi qu'un mécanisme à rochet pour solidariser l'élément plastiquement déformable à l'ensemble support lors de la déformation plastique de l'élément plastiquement déformable.

En pratique, l'organe de déformation va être un organe présentant une face arrondie et ménagé sur la paroi extérieure du tube-corps. L'élément plastiquement déformable est alors agencé pour enrouler en partie au moins la face arrondie de l'organe de déformation. Ainsi, le tube-corps, lors de sa rétractation dans l'ensemble support, va entraîner l'élément plastiquement déformable, ce dernier se déroulant sur l'organe de déformation. Selon l'invention le tube-corps présente une extension périphérique formant l'organe de déformation.

Le document WO2009/121386A1 relève de l'article 54(3) CBE. Il décrit une colonne de direction du type de celle mentionnée au paragraphe [0014]. Cependant, contrairement à l'objet de la revendication 1 de la présente demande, WO2009/121386A1 ne divulgue pas un tube-corps comprenant une extension périphérique, de forme arrondie, autour de laquelle un élément déformable plastiquement s'enroule en partie au moins, l'extension formant l'organe de déformation.

Avantageusement, le mécanisme à rochet est agencé pour coopérer directement avec l'élément plastiquement déformable lors de la déformation plastique de ce dernier. Cela permet ainsi de limiter le nombre de pièces nécessaires à la mise en oeuvre de la dissipation d'énergie, et donc de réduire le coût et le temps nécessaire à l'assemblage des pièces de la colonne de direction.

Selon l'invention, le mécanisme à rochet comporte une réglette solidaire de l'élément plastiquement déformable et coopérant avec un cliquet mobile.

Avantageusement, le cliquet est associé aux moyens d'ajustement et de blocage de sorte que, lorsque les moyens d'ajustement et de blocage passent de l'état d'ajustement à l'état de blocage, le cliquet passe d'une position libre à une position de contact avec la réglette. Cette configuration permet ainsi, lorsqu'il est agit sur les moyens d'ajustement et de blocage, d'agir simultanément sur le mécanisme à rochet.

Selon une configuration particulièrement avantageuse, le mécanisme à rochet comporte des moyens élastiques pour mettre en prise le cliquet avec la réglette lors de la déformation plastique de l'élément plastiquement déformable. Cela permet ainsi d'assurer en permanence le maintien en contact du cliquet contre la réglette d'une part, et la mise en prise du cliquet avec la réglette lors d'un impact transmis au tube-corps d'autre part. Il peut être prévu que les moyens élastiques soient formés d'un seul tenant avec le cliquet.

Avantageusement, la réglette comprend des évidements ménagés de manière incrémentale sur la réglette et agencés pour s'engrener avec des dents du cliquet.

Avantageusement, les moyens d'ajustement et de blocage comprennent un organe de commande pour faire passer les moyens d'ajustement et de blocage de l'état d'ajustement à l'état de blocage. Cet organe de commande pourra, selon les configurations souhaitées, être manuel ou motorisé.

Avantageusement, les moyens d'ajustement et de blocage comprennent un arbre de liaison reliant, directement ou indirectement, l'organe de commande au cliquet, l'arbre de liaison étant mobile en rotation autour d'un axe perpendiculaire à l'axe AA du tube-corps sous l'action de l'organe de commande.

Dans le cas d'une liaison directe, il peut être prévu que le cliquet comporte un logement traversé par l'arbre de liaison, le logement étant configuré pour empêcher tout mouvement de l'arbre de liaison par rapport au cliquet.

Dans le cas d'une liaison indirecte, le passage de la position libre à la position de contact du cliquet sur la réglette, le cliquet étant alors solidaire de l'ensemble support est effectuée sous l'action d'une pièce intermédiaire solidaire de l'arbre de liaison.

Avantageusement, la réglette est fixée sur le tube-corps au moyen d'un pion de cisaillement. Le pion de cisaillement permet une absorption d'énergie supplémentaire à celle générée par l'élément plastiquement déformable.

Selon une configuration particulière, l'élément déformable plastiquement consiste en une bande disposée dans le prolongement de la réglette. Afin de réduire le nombre de pièces, l'invention prévoit une bande et une réglette formant une seule et même pièce.

D'autres objets et avantages de l'invention apparaîtront au cours de la description qui suit, faite en référence aux dessins annexés, dans lesquels :
- la figure 1 représente une vue en perspective de dessous d'une colonne de direction réglable selon l'invention, la colonne de direction étant équipée d'un volant ;
- la figure 2 représente une vue agrandie de la colonne de direction de la figure 1, la colonne de direction étant en position verrouillée ;
- la figure 3 représente une vue partielle de la colonne de direction de la figure 2, la colonne de direction comprenant des moyens d'ajustement et de blocage de en position verrouillée engrenée ;
- la figure 4 représente une vue partielle de la colonne de direction de la figure 2, la colonne de direction comprenant des moyens d'ajustement et de blocage de en position verrouillée non engrenée ;
- la figure 5 représente une vue de l'un des éléments de blocage formant les moyens d'ajustement et de blocage de la colonne de direction ;
- la figure 6 représente une vue agrandie de la colonne de direction de la figure 1, la colonne de direction étant en position déverrouillée
- la figure 7 représente une vue en coupe de la colonne de direction de la figure 2 selon l'axe VII-VII ;
- la figure 8 représente une vue en coupe de la colonne de direction de la figure 7 après un impact frontal du véhicule avec un obstacle ;
- la figure 9 représente une vue en perspective d'une colonne de direction selon une variante de réalisation, la colonne de direction étant en position verrouillée ;
- la figure 10 représente une vue en perspective de la colonne de direction de la figure 9, la colonne de direction étant en position déverrouillée ; et
- la figure 11 représente une vue en coupe de la colonne de direction de la figure 9 selon l'axe XI-XI.

Pour plus de clarté, les éléments identiques ou similaires des différents modes de réalisation sont repérés par des signes de référence identiques sur l'ensemble des figures.

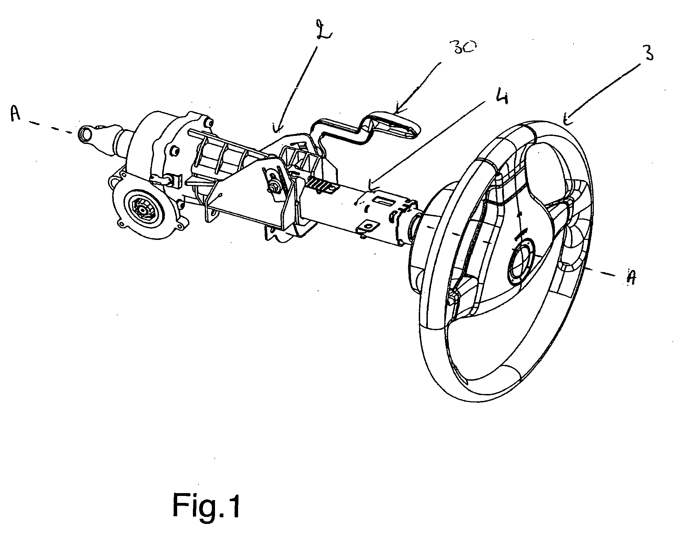

En relation avec les figures 1 à 8, il est décrit une colonne de direction 1 pour véhicule automobile, la colonne de direction étant réglable au moins axialement.

La colonne de direction 1 comprend un ensemble support 2 destiné à être fixé sur un châssis de véhicule (non représenté) ainsi qu'un tube-corps 4, d'axe longitudinal AA, sur lequel est fixé le volant 3 du véhicule, comme illustré sur la figure 1. Le tube-corps 4 est monté coulissant dans l'ensemble support 2 de sorte à permettre le réglage de la profondeur du volant (réglage axial) par coulissement du tube-corps 4 dans l'ensemble support 2.

Afin de maintenir le volant selon la profondeur souhaitée, la colonne de direction 1 comporte des moyens d'ajustement et de blocage aptes à passer d'un état d'ajustement de la position du tube-corps 4 dans l'ensemble support 2 à un état de blocage du tube-corps 4 dans une position ajustée souhaitée dans l'ensemble support 2.

Dans le mode de réalisation décrit, les moyens d'ajustement et de blocage comprennent une bride de guidage 10 dans laquelle le tube-corps 4 est monté et deux pattes de serrage 12 destinées à venir en appui de part et d'autre des flancs 11 de la bride de guidage 10. La bride de guidage 10 permet de guider axialement le tube-corps 4 dans l'ensemble support 2.

Un système de cames comprenant une came mobile en rotation et une came fixe permet de serrer l'ensemble pattes de serrage 12, bride de guidage 10 et tube-corps 4. La came mobile est entraînée par l'intermédiaire d'un organe de commande. Dans le mode de réalisation décrit, l'organe de commande comprend un levier de commande 30 permettant d'actionner manuellement le serrage des éléments entre eux de sorte à bloquer le tube-corps 4 dans l'ensemble support 2, et ainsi de faire passer les moyens d'ajustement et de blocage de l'état d'ajustement à l'état de blocage.

La colonne de direction comporte également un élément plastiquement déformable 50 d'absorption d'énergie destiné à se déformer plastiquement lors d'une rétraction du tube-corps 4 dans l'ensemble support 2 suite à un impact transmis au tube-corps 4, ainsi qu'un mécanisme à rochet 5 destiné à solidariser l'élément plastiquement déformable 50 à l'ensemble support 2 lors de la déformation plastique de l'élément 50.

Le mécanisme à rochet 5 comporte un premier et deuxième éléments de blocage agencés pour coopérer l'un avec l'autre, l'un des éléments de blocage étant solidaire de l'ensemble support 2, l'autre élément de blocage étant fixé sur le tube-corps 4.

Plus particulièrement, l'élément de blocage solidaire de l'ensemble support 2 comprend un cliquet 6 mobile, lequel comporte des dents 61 agencées pour coopérer avec des évidements 71 ménagés sur une réglette 7 constituant l'élément de blocage fixé sur le tube-corps 4. Dans le mode de réalisation décrit, les évidements 71 sont répartis régulièrement sur la réglette 7.

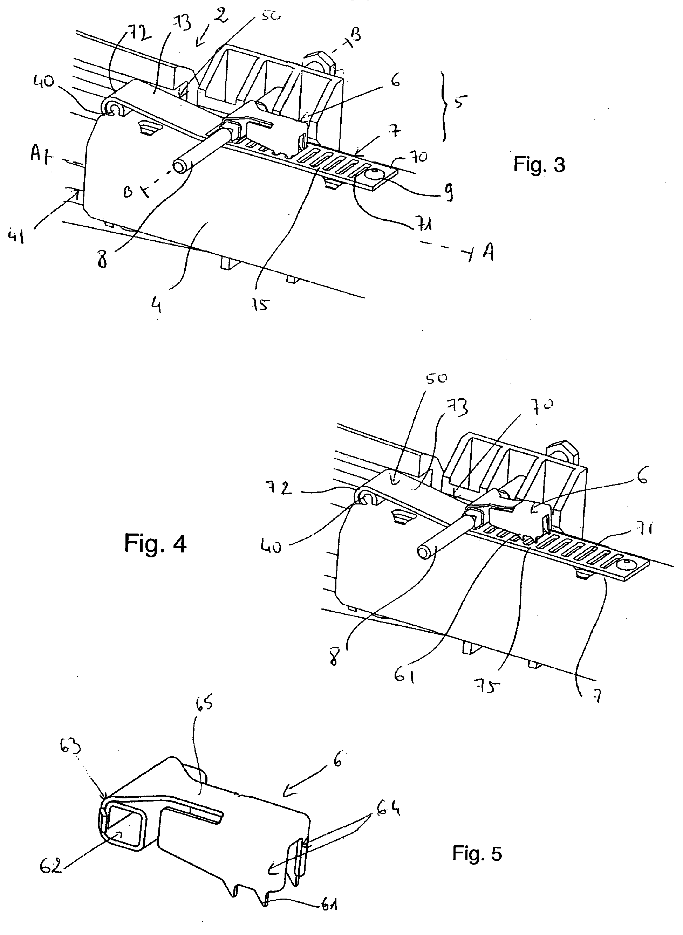

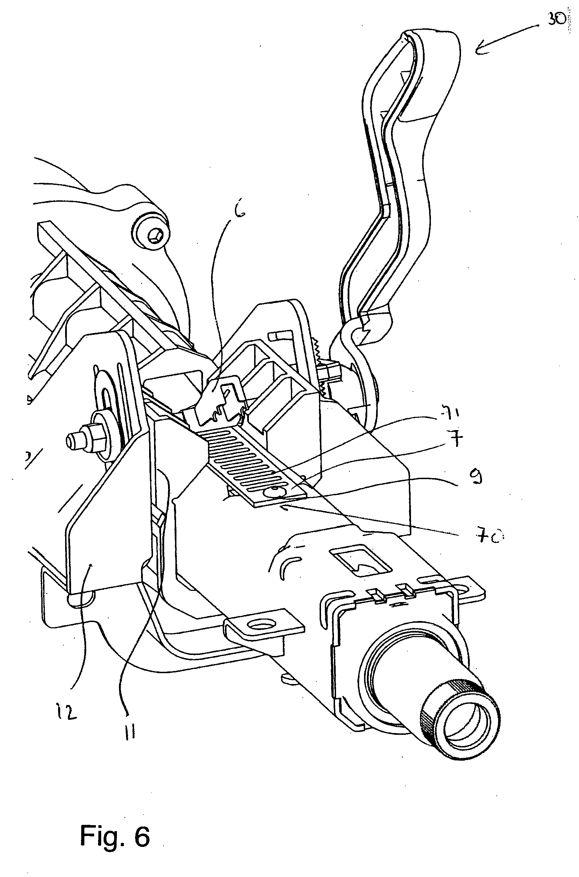

Avantageusement, le cliquet 6 est associé aux moyens d'ajustement et de blocage de sorte que, lorsque les ces derniers passent de l'état d'ajustement à l'état de blocage, le cliquet 6 passe d'une position libre (figure 6) à une position de contact avec la réglette 7 (figures 4 et 5).

Dans le mode de réalisation décrit, le cliquet 6 est fixé sur l'ensemble support 2 par l'intermédiaire d'un arbre de liaison 8 mobile en rotation autour d'un axe BB perpendiculaire à l'axe longitudinal AA du tube-corps 4.

Plus particulièrement, le cliquet 6 comporte un logement tubulaire 62, de section carrée, recevant l'arbre de liaison 8. Celui-ci est dimensionné de manière à maintenir fixe le cliquet 6 sur l'arbre de liaison 8, et ainsi éviter toute rotation de ce dernier dans le logement 62.

Il est bien entendu évident que le cliquet 6 peut être maintenu fixe sur l'arbre de liaison 8 par d'autres techniques telles que le vissage, la soudure, le rivetage, ou bien au moyen d'un ajustement de forme polygonale disposé entre les parois délimitant le logement 62 et l'arbre de liaison 8.

Concernant la réglette 7, celle-ci est solidaire de l'élément plastiquement déformable 50. Dans le mode de réalisation décrit, la réglette 7 et l'élément plastiquement déformable 50 sont réalisés d'un seul tenant et se présentent sous la forme d'un strap (bande 70). Il peut être également prévu une réglette 7 fixée directement sur l'élément plastiquement déformable 50.

Plus particulièrement, la bande 70 est repliée sur elle-même de façon à présenter une forme en U. Elle est agencée sur l'extrémité intérieure 41 du tube-corps 4 de sorte à présenter une partie 73 montée à l'extérieur du tube-corps 4, l'autre partie 74 étant disposée à l'intérieur du tube-corps 4. Comme illustré sur les figures 4, 7 et 8, la partie courbée 72 de la bande plate 70 est disposée en appui sur une extension 40 en forme d'arc de cercle formée sur l'extrémité intérieure 41 du tube-corps 4. Par extrémité intérieure on entend l'extrémité du tube-corps disposée à l'intérieur de l'ensemble support 2.

La partie 73 de bande plate 70 montée à l'extérieur du tube-corps 4 comprend les évidements 71 transversaux équidistants les uns des autres,. Ainsi, la portion de la partie 73 portant les évidements 71 constitue la réglette 7, la partie courbée 72 et la partie 74 disposée à l'intérieur du tube-corps 4 de la bande 70 constituant l'élément déformable plastiquement 50 de la colonne de direction.

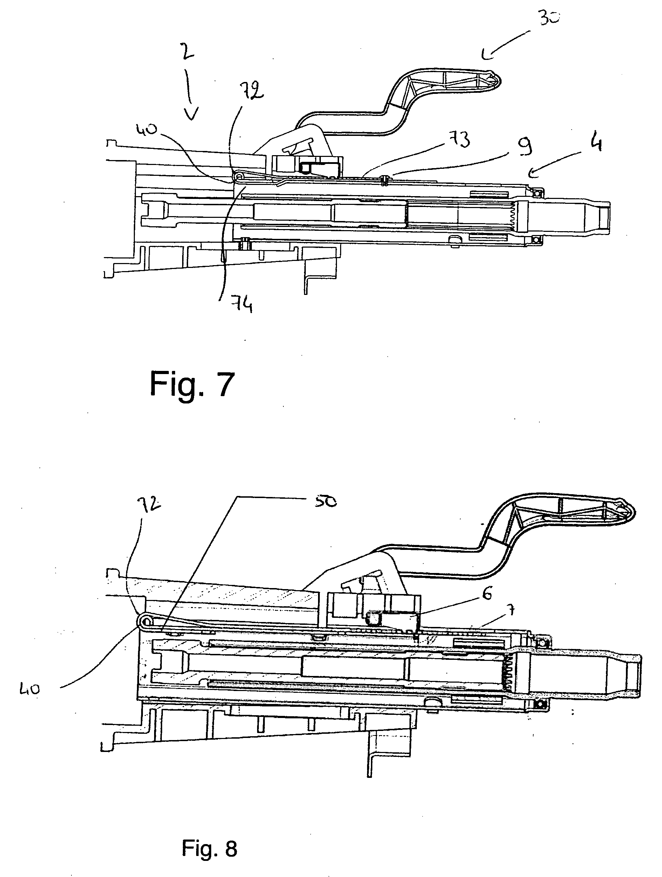

Comme illustré sur la figure 7, les deux extrémités de la bande plate 70 sont fixées sur le tube-corps 4 par l'intermédiaire d'un pion de cisaillement 9 traversant la paroi du tube-corps 4. Avantageusement, le pion de cisaillement 9 est en plastique. Ainsi, et comme on le verra plus loin, le pion de cisaillement 9 constitue un moyen d'absorption d'énergie supplémentaire à celui formé par les partie 72 et 74 de la bande 70 lors de l'impact frontal du véhicule avec un obstacle. Il est bien entendu évident que d'autres moyens de fixation de la bande 70 sur le tube-corps 4 peuvent être mis en oeuvre tels qu'un rivet, une soudure ou un clinchage. De même, selon les cas, il peut être avantageux de ne fixer la bande plate 70 sur le tube-corps 4 qu'au niveau de l'une de ses extrémités.

Dans le mode de réalisation décrit, la bande 70 présente une largeur et une épaisseur constante sur toute sa longueur. Il pourra être avantageux cependant, dans certains cas, de prévoir une bande 70 présentant une largeur et/ou une épaisseur non constante.

Le mécanisme à rochet 5 comporte en outre des moyens élastiques permettant d'assurer le maintien en contact du cliquet 6 contre la réglette 7 d'une part, et la mise en prise du cliquet 6 avec la réglette 7 lors d'un impact transmis au tube-corps 4 suite à une collision du véhicule avec un obstacle d'autre part. Avantageusement, les moyens élastiques sont formés d'un seul tenant avec le cliquet 6.

Selon une configuration préférée de l'invention, le cliquet 6 est formé en une seule pièce (figure 5). Dans ce mode de réalisation, le cliquet 6, réalisé à partir d'une bande d'acier, présente une extrémité formée par un enroulement 63 de la bande, l'enroulement étant réalisé de manière à former un logement de section carré correspondant au logement 62 précédemment défini. Le cliquet 6 comprend, sur l'extrémité opposée à l'enroulement 63, deux éléments de renfort 64, s'étendant dans un plan sensiblement perpendiculaire au plan de la bande, et portant les dents 61 du cliquet 6. La partie 65 formant la jonction entre les éléments de renforts 64 et l'enroulement 63 consiste en une lame remplissant la fonction de ressort. Cette lame ressort constitue les moyens élastiques du mécanisme à rochet.

Il va à présent être décrit le principe de fonctionnement de la colonne de direction 1 présentée ci-dessus.

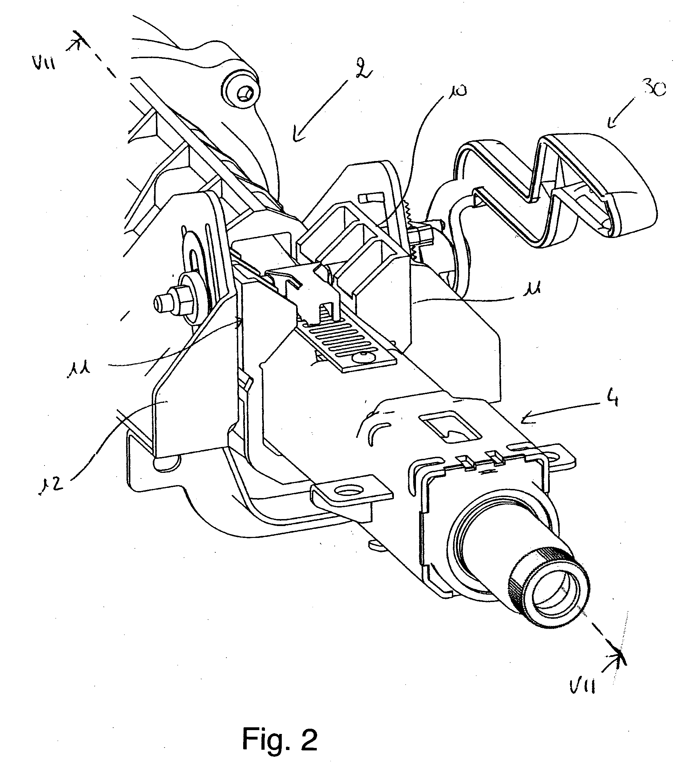

Lorsqu'on souhaite régler la position du volant 3, le levier de commande 30 est disposé dans une position dans laquelle les moyens d'ajustement et de blocage sont en position d'ajustement et le mécanisme à rochet en position libre (levier en position déverrouillée - figure 6). Lors du passage de la position verrouillée (moyens d'ajustement et de blocage en position de blocage et mécanisme à rochet en position de contact, comme illustré sur les figures 2 à 4 et 7) à la position déverrouillée, le cliquet 6 pivote autour de l'axe BB de l'arbre de liaison 8. Le cliquet 6 n'est alors plus en contact avec la réglette 7, et les pattes de serrage 12 ne serrent plus sur la bride de guidage 10 laquelle n'exerce alors plus à son tour de pression sur le tube-corps 4. Le réglage de la position du tube-corps 4 par rapport à l'ensemble support 2 peut alors se faire librement.

L'arbre de liaison 8 et le cliquet 6 étant ainsi maintenus fixes par rapport à la bride de guidage 10, le tube-corps 4, rigidement lié au volant 3, peut alors coulisser librement à l'intérieur de la bride pour permettre le réglage en profondeur du volant. La réglette 7 ainsi que l'élément plastiquement déformable 50, retenus sur le tube-corps 4 par le pion de cisaillement 9 est alors également en mouvement par rapport à la bride de guidage 10 et au cliquet 6.

En position de conduite, le levier de commande 30 est disposé dans une position dans laquelle les moyens d'ajustement et de blocage sont en position de blocage, le cliquet et la réglette du mécanisme à rochet étant en position de contact (position verrouillée du levier de commande 30). Lors du passage de la position déverrouillée à la position verrouillée, les patte de serrage 12 sont serrées sur la bride de guidage 10 qui elle-même est serrée sur le tube-corps 4, lequel est alors maintenu immobile par rapport à l'ensemble support 2. Afin d'assurer le serrage entre la bride de guidage 10 et le tube-corps 4, il est avantageux de dimensionner en largeur la bande 70 de sorte à laisser un jeu suffisant entre les flancs de la bande 70 et la bride de guidage 10.

Dans la position verrouillée, les dents 61 du cliquet 6 sont en contact avec la face de la réglette 7. En fonction de la position axiale de la réglette 7 par rapport au cliquet 6, les dents 61 de ce dernier sont ou bien engrenées dans les évidements 71 ménagés dans la réglette 7 (figure 3), ou bien en appui sur la partie 75 reliant deux évidements entre eux (figure 4). Dans le cas où le tube-corps 4 est positionné de sorte que les dents 61 du cliquet 6 se trouvent au contact des parties 75 disposées entre les évidements 71, et non dans les évidements 71, la fermeture complète du levier de commande 30 est permise du fait de la souplesse conférée par la lame ressort du cliquet 6. Dans les deux configurations, le cliquet 6 est maintenu en pression sur la bande 70 grâce à l'effet ressort de la lame.

Lorsqu'une collision frontale du véhicule avec un obstacle se produit, le tube-corps 4 se rétracte dans l'ensemble support 2, le levier de commande 30 étant en position verrouillée.

Si les dents 61 du cliquet 6 sont engagées dans les évidements 71 de la réglette 7, celle-ci, en prise dans le cliquet 6 reste fixe par rapport à la bride de guidage 10 alors que le tube-corps 4 se rétracte. Lors de la rétractation, l'extrémité intérieure 41 du tube-corps 4 pourvue de l'extension 40 en arc de cercle entraîne le déroulement de la bande 70 autour de l'extension 40, accompagné conjointement d'un cisaillement du pion de cisaillement 9. Le déroulement de la bande 70, et donc sa déformation, permet d'absorber l'énergie générée par le tube-corps 4 sur l'ensemble de sa course de rétraction dans l'ensemble support 2. La rupture du pion de cisaillement 9 permet en outre une absorption d'énergie supplémentaire en début de rétractation du tube-corps 4 dans l'ensemble support 2.

Si les dents 61 du cliquet 6 ne sont pas engagées dans des évidements 71 de la réglette 7, cette dernière va alors effectuer un glissement sous les dents 61 du cliquet 6 jusqu'à ce que des dents 61 arrivent en face d'un des évidements de la réglette 7. Grâce à la pression exercée sur la bande 70 par la lame ressort du cliquet, les dents 61, au moment où elles arrivent en face d'un évidemment, s'engagent automatiquement dans l'évidemment concerné. On se retrouve alors dans la configuration où les dents du cliquet 6 sont engagées dans les évidements de la bande 7.

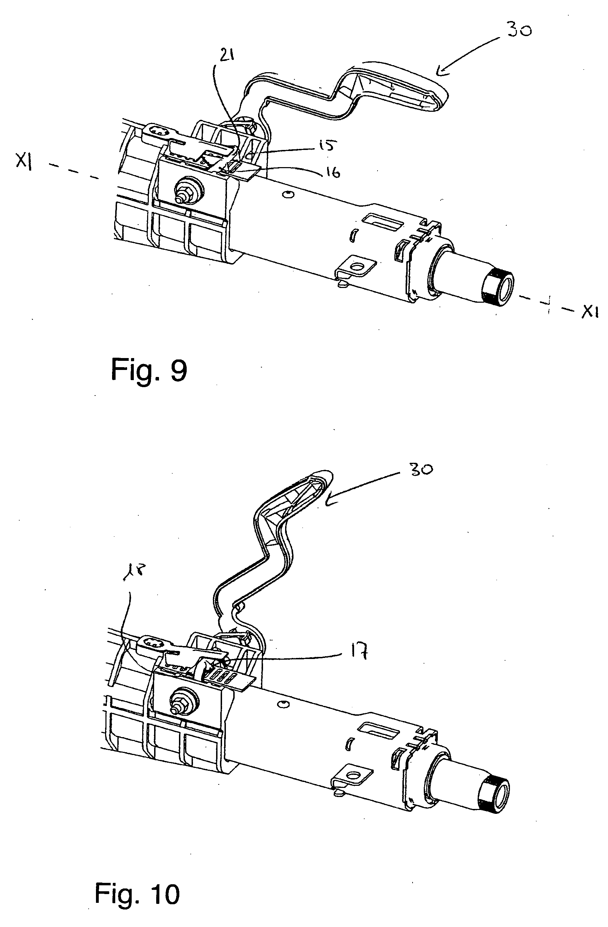

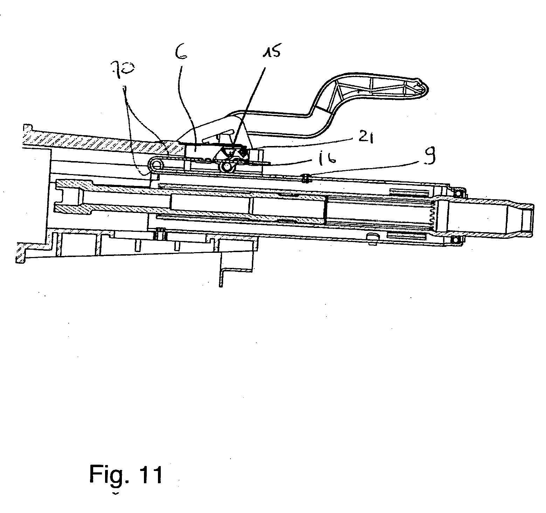

En référence aux figures 9, 10 et 11, il est décrit une variante de réalisation de la colonne de direction 1.

Dans cette variante, le cliquet 6 est fixé directement sur l'ensemble support 2. Afin de permettre le désengrenage du cliquet 6 avec la réglette 7, une pièce intermédiaire 15 est fixée sur l'arbre de liaison 8. Cette pièce est agencée pour soulever le cliquet 6 lorsque l'arbre de liaison 8 est entraîné en rotation sous l'action du déverrouillage du levier de commande 30, la rotation de l'arbre de liaison 8 entraînant la rotation de la pièce intermédiaire 15.

Dans le mode de réalisation décrit, la pièce intermédiaire 15 comporte deux bras de levier 16 fixés sur l'arbre de liaison 8 et s'étendant de part et d'autre des bords latéraux de la réglette 7. Les deux bras de levier 15 sont reliés entre eux par un organe de contact 21 avec le cliquet 6.

La pièce intermédiaire 15 comporte avantageusement une première série de pattes d'appui 17 agencées pour venir en appui contre la réglette 7 lorsque le levier de commande 30 est verrouillé (figure 9). Les pattes d'appui 17 permettent ainsi d'éviter les vibrations de la réglette 7 lors du roulement du véhicule. Elles permettent également d'éviter que la réglette 7 ne vibre lors de son déroulement au cours d'un impact frontal du véhicule avec un obstacle et donc n'influe sur la dissipation d'énergie.

Il peut être prévu d'autre série de pattes d'appui 18, en remplacement ou en complément de la première série, les pattes d'appui 18 de la deuxième série étant agencée pour venir en appui contre la réglette 7 lorsque le levier de commande 30 est en position déverrouillée (figure 10). Les pattes d'appui 19, 20 permettent ainsi d'éviter que la réglette 7 ne remonte en même temps que le cliquet 6 lors du déverrouillage du levier de commande 30.

Le fonctionnement de la colonne de direction illustrée sur les figures 9, 10 et 11 est identique à celui décrit pour la colonne de direction illustrée sur les figures 1 à 8.

Dans les modes de réalisation précédemment décrits, les moyens d'absorption d'énergie se présentent sous la forme d'une bande disposée dans le prolongement de la réglette. Il est bien entendu évident que l'invention ne se limite pas à une telle configuration des moyens d'absorption d'énergie et que d'autres dispositifs tels qu'une bande filaire en hélice, une bande à déformation de matière ou une bande à enroulement spiralé peuvent être envisagés dans une colonne de direction réglable sans pour autant sortir du champ de l'invention.

De même, il a été représenté un arbre de liaison 8 entraînée en rotation manuellement au moyen d'un levier de commande 30. Il est bien entendu évident que le levier de commande 30 peut être remplacé par un moteur électrique, de sorte à entraîner automatiquement l'arbre de liaison 8.

## Revendications

1. Colonne de direction (1) réglable pour véhicule automobile comprenant :
- un ensemble support (2) destiné à être fixé sur un châssis de véhicule,
- un tube-corps (4), d'axe longitudinal AA, monté coulissant dans l'ensemble support (2),
- des moyens d'ajustement et de blocage aptes à passer d'un état d'ajustement de la position du tube-corps (4) dans l'ensemble support (2) à un état de blocage du tube-corps (4) dans une position ajustée souhaitée dans l'ensemble support (2),
- un élément plastiquement déformable (50) d'absorption d'énergie coopérant avec un organe de déformation (40) solidaire du tube-corps (4) pour se déformer plastiquement lors d'une rétraction du tube-corps (4) dans l'ensemble support (2) suite à un impact transmis au tube-corps (4) lorsque les moyens d'ajustement et de blocage sont en état de blocage,
- un mécanisme à rochet (5) pour solidariser l'élément plastiquement déformable à l'ensemble support (2) lors de la déformation plastique de l'élément plastiquement déformable, le mécanisme à rochet (5) comportant une réglette (7) fixée sur le tube - corps (4), réalisée d'un seul tenant avec l'élément plastiquement déformable en forme de bande et coopérant avec un cliquet (6) mobile, le tube-corps (4) comprenant une extension (40) périphérique, de forme arrondie, autour de laquelle l'élément déformable plastiquement (50) s'enroule en partie au moins, l'extension (40) formant l'organe de déformation.

2. Colonne de direction (1) selon la revendication 1, **caractérisée en ce que** le mécanisme à rochet (5) est agencé pour coopérer directement avec l'élément plastiquement déformable (50) lors de la déformation plastique de ce dernier.

3. Colonne de direction (1) selon la revendication 1 ou la revendication 2, **caractérisée en ce que** le mécanisme à rochet (5) comporte un premier et deuxième éléments de blocage agencés pour coopérer l'un avec l'autre, l'un des éléments de blocage étant solidaire de l'ensemble support (2), l'autre élément de blocage étant fixé sur le tube- corps (4).

4. Colonne de direction (1) selon la revendication 1, **caractérisée en ce que** le cliquet (6) est associé aux moyens d'ajustement et de blocage de sorte que, lorsque les moyens d'ajustement et de blocage passent de l'état d'ajustement à l'état de blocage, le cliquet (6) passe d'une position libre à une position de contact avec la réglette (7).

5. Colonne de direction selon l'une des revendications 1 à 4, **caractérisée en ce que** le mécanisme à rochet (5) comporte des moyens élastiques pour mettre en prise le cliquet (6) avec la réglette (7) lors de la déformation plastique de l'élément plastiquement déformable.

6. Colonne de direction selon la revendication 5, **caractérisée en ce que** les moyens élastiques sont formés d'un seul tenant avec le cliquet (6).

7. Colonne de direction réglable selon l'une quelconque des revendications 1 à 6, **caractérisée en ce que** la réglette (7) comprend des évidements (71) ménagés de manière incrémentale sur la réglette (7) et agencés pour s'engrener avec des dents (61) du cliquet (6).

8. Colonne de direction selon l'une quelconque des revendications 1 à 7, **caractérisée en ce que** les moyens d'ajustement et de blocage comprennent un organe de commande pour faire passer les moyens d'ajustement et de blocage de l'état d'ajustement à l'état de blocage.

9. Colonne de direction selon la revendication 8, **caractérisée en ce que** l'organe de commande est un levier de commande (30) manuel.

10. Colonne de direction selon la revendication 8, **caractérisée en ce que** l'organe de commande est motorisé.

11. Colonne de direction selon l'une quelconque des revendications 8 à 10, **caractérisée en ce que** les moyens d'ajustement et de blocage comprennent un arbre de liaison reliant, directement ou indirectement, l'organe de commande au cliquet (60), l'arbre de liaison (8) étant mobile en rotation autour d'un axe perpendiculaire à l'axe AA du tube- corps (4) sous l'action de l'organe de commande.

12. Colonne de direction selon l'une quelconque des revendications 8 à 10, **caractérisée en ce que** le cliquet (60) comporte un logement (62) traversé par un arbre de liaison (8), le logement (62) étant configuré pour empêcher tout mouvement de l'arbre de liaison (8) par rapport au cliquet (60).

13. Colonne de direction selon la revendication 11 ou la revendication 12, **caractérisée en ce que** le cliquet (60) est solidaire de l'ensemble support (2), son passage de la position libre à la position de contact sur la réglette (70) étant effectuée sous l'action d'une pièce intermédiaire solidaire de l'arbre de liaison (8).

14. Colonne de direction selon l'une quelconque des revendications 1 à 13, **caractérisée en ce que** la réglette (70) est fixée sur le tube-corps (4) au moyen d'un pion de cisaillement.

## Patentansprüche

1. Einstellbare Lenksäule (1) für ein Kraftfahrzeug, die enthält:
- eine Trägereinheit (2), die dazu bestimmt ist, an einem Fahrzeugrahmen befestigt zu werden,
- einen Rohrkörper (4) mit einer Längsachse AA, der gleitend in die Trägereinheit (2) montiert ist,
- Anpass- und Blockiereinrichtungen, die von einem Anpasszustand der Stellung des Rohrkörpers (4) in der Trägereinheit (2) in einen Blockierzustand des Rohrkörpers (4) in einer gewünschten angepassten Stellung in der Trägereinheit (2) übergehen können,
- ein plastisch verformbares Energieaufnahmeelement (50), das mit einem Verformungsorgan (40) zusammenwirkt, welches fest mit dem Rohrkörper (4) verbunden ist, um sich bei einem Zurückziehen des Rohrkörpers (4) in die Trägereinheit (2) nach einem auf den Rohrkörper (4) übertragenen Aufprall plastisch zu verformen, wenn die Anpass- und Blockiereinrichtungen im Blockierzustand sind,
- einen Sperrklinkenmechanismus (5), um das plastisch verformbare Element bei der plastischen Verformung des plastisch verformbaren Elements fest mit der Trägereinheit (2) zu verbinden, wobei der Sperrklinkenmechanismus (5) eine am Rohrkörper (4) befestigte Leiste (7) aufweist, die aus einem Stück mit dem plastisch verformbaren Element in Form eines Streifens hergestellt wird und mit einer beweglichen Klinke (6) zusammenwirkt, wobei der Rohrkörper (4) eine Umfangsausdehnung (40) abgerundeter Form aufweist, um die herum das plastisch verformbare Element (50) sich zumindest zum Teil wickelt, wobei die Ausdehnung (40) das Verformungsorgan bildet.

2. Lenksäule (1) nach Anspruch 1, **dadurch gekennzeichnet, dass** der Sperrklinkenmechanismus (5) eingerichtet ist, um direkt mit dem plastisch verformbaren Element (50) bei dessen plastischer Verformung zusammenzuwirken.

3. Lenksäule (1) nach Anspruch 1 oder Anspruch 2, **dadurch gekennzeichnet, dass** der Sperrklinkenmechanismus (5) ein erstes und ein zweites Blockierelement aufweist, die eingerichtet sind, um zusammenzuwirken, wobei eines der Blockierelemente fest mit der Trägereinheit (2) verbunden ist, während das andere Blockierelement am Rohrkörper (4) befestigt ist.

4. Lenksäule (1) nach Anspruch 1, **dadurch gekennzeichnet, dass** die Klinke (6) den Anpass- und Blockiereinrichtungen zugeordnet ist, so dass, wenn die Anpass- und Blockiereinrichtungen vom Anpasszustand in den Blockierzustand übergehen, die Klinke (6) von einer freien Stellung in eine Kontaktstellung mit der Leiste (7) übergeht.

5. Lenksäule nach einem der Ansprüche 1 bis 4, **dadurch gekennzeichnet, dass** der Sperrklinkenmechanismus (5) elastische Einrichtungen aufweist, um die Klinke (6) bei der plastischen Verformung des plastisch verformbaren Elements mit der Leiste (7) in Eingriff zu bringen.

6. Lenksäule nach Anspruch 5, **dadurch gekennzeichnet, dass** die elastischen Einrichtungen aus einem Stück mit der Klinke (6) geformt werden.

7. Einstellbare Lenksäule nach einem der Ansprüche 1 bis 6, **dadurch gekennzeichnet, dass** die Leiste (7) Aussparungen (71) aufweist, die inkremental auf der Leiste (7) ausgespart und eingerichtet sind, um mit Zähnen (61) der Klinke (6) ineinanderzugreifen.

8. Lenksäule nach einem der Ansprüche 1 bis 7, **dadurch gekennzeichnet, dass** die Anpass- und Blockiereinrichtungen ein Steuerorgan enthalten, um die Anpass- und Blockiereinrichtungen vom Anpasszustand in den Blockierzustand übergehen zu lassen.

9. Lenksäule nach Anspruch 8, **dadurch gekennzeichnet, dass** das Steuerorgan ein manueller Steuerhebel (30) ist.

10. Lenksäule nach Anspruch 8, **dadurch gekennzeichnet, dass** das Steuerorgan motorisiert ist.

11. Lenksäule nach einem der Ansprüche 8 bis 10, **dadurch gekennzeichnet, dass** die Anpass- und Blockiereinrichtungen eine Verbindungswelle enthalten, die das Steuerorgan direkt oder indirekt mit der Klinke (60) verbindt, wobei die Verbindungswelle (8) unter der Einwirkung des Steuerorgans um eine Achse lotrecht zur Achse AA des Rohrkörpers (4) drehbeweglich ist.

12. Lenksäule nach einem der Ansprüche 8 bis 10, **dadurch gekennzeichnet, dass** die Klinke (60) eine Aufnahme (62) aufweist, die von einer Verbindungswelle (8) durchquert wird, wobei die Aufnahme (62) konfiguriert ist, um jede Bewegung der Verbindungswelle (8) bezüglich der Klinke (60) zu verhindern.

13. Lenksäule nach Anspruch 11 oder Anspruch 12, **dadurch gekennzeichnet, dass** die Klinke (60) fest mit der Trägereinheit (2) verbunden ist, wobei ihr Übergang von der freien Stellung in die Kontaktstellung auf der Leiste (70) unter der Einwirkung eines Zwischenbauteils erfolgt, das fest mit der Verbindungswelle (8) verbunden ist.

14. Lenksäule nach einem der Ansprüche 1 bis 13, **dadurch gekennzeichnet, dass** die Leiste (70) am Rohrkörper (4) mittels eines Scherstifts befestigt ist.

## Claims

1. Adjustable steering column (1) for a motor vehicle, comprising:
- a support assembly (2) intended to be fixed to a vehicle chassis,
- a body tube (4), of longitudinal axis AA, mounted to slide in the support assembly (2),
- adjustment and blocking means able to pass from a state of adjusting the position of the body tube (4) in the support assembly (2) into a state of blocking the body tube (4) in the support assembly (2) in a desired adjusted position,
- a plastically deformable energy absorption element (50) collaborating with a deformation member (40) secured to the body tube (4) to deform plastically when the body tube (4) is retracted into the support assembly (2) following an impact transmitted to the body tube (4) when the adjustment and blocking means are in the blocking state,
- a ratchet mechanism (5) to secure the plastically deformable element to the support assembly (2) upon plastic deformation of the plastically deformable element, the ratchet mechanism (5) comprising a strip (7) fixed to the body tube (4), made as one piece with the tape-like plastically deformable element and collaborating with a mobile pawl (6), the body tube (4) comprising a peripheral extension (40), of rounded shape, around which the plastically deformable element (50) is wound, at least in part, the extension (40) forming the deformation member.

2. Steering column (1) according to Claim 1, **characterized in that** the ratchet mechanism (5) is arranged to collaborate directly with the plastically deformable element (50) as the latter plastically deforms.

3. Steering column (1) according to Claim 1 or Claim 2, **characterized in that** the ratchet mechanism (5) comprises a first and a second blocking element which are arranged so as to collaborate with one another, one of the blocking elements being secured to the support assembly (2), the other blocking element being fixed to the body tube (4).

4. Steering column (1) according to Claim 1, **characterized in that** the pawl (6) is associated with the adjustment and blocking means so that when the adjustment and blocking means pass from the adjustment state to the blocking state, the pawl (6) passes from a free position into a position in contact with the strip (7).

5. Steering column according to one of Claims 1 to 4, **characterized in that** the ratchet mechanism (5) comprises elastic means for placing the pawl (6) in engagement with the strip (7) upon plastic deformation of the plastically deformable element.

6. Steering column according to Claim 5, **characterized in that** the elastic means are formed as one piece with the pawl (6).

7. Adjustable steering column according to any one of Claims 1 to 6, **characterized in that** the strip (7) comprises recesses (71) formed incrementally along the strip (7) and arranged to engage with the teeth (61) of the pawl (6).

8. Steering column according to any one of Claims 1 to 7, **characterized in that** the adjustment and blocking means comprise a control member for causing the adjustment and blocking means to pass from the adjustment state to the blocking state.

9. Steering column according to Claim 8, **characterized in that** the control member is a manual control lever (30).

10. Steering column according to Claim 8, **characterized in that** the control member is motorized.

11. Steering column according to any one of Claims 8 to 10, **characterized in that** the adjustment and blocking means comprise a connecting shaft connecting the control member directly or indirectly to the pawl (60), the connecting shaft (8) being capable of rotational movement around an axis perpendicular to the axis AA of the body tube (4) under the action of the control member.

12. Steering column according to any one of Claims 8 to 10, **characterized in that** the pawl (60) comprises a housing (62) through which a connecting shaft (8) passes, the housing (62) being configured to prevent any movement of the connecting shaft (8) with respect to the pawl (60).

13. Steering column according to Claim 11 or Claim 12, **characterized in that** the pawl (60) is secured to the support assembly (2), its passage from the free position into the position in contact with the strip (70) being brought about under the action of an intermediate component secured to the connecting shaft (8).

14. Steering column according to any one of Claims 1 to 13, **characterized in that** the strip (70) is fixed to the body tube (4) by means of a shear pin.
